# EUROPEAN PATENT APPLICATION

(11) **EP 4 241 582 A1**
(43) Date of publication of application: **13.09.2023**
(21) Application number: 21889256.0
(22) Date of filing: 05.11.2021
(51) Int. Cl.: A23P 10/00, A23P 30/00

(54) **FOOD PROCESSING DEVICE**

(30) Priority: 05.11.2020 JP 2020185159
(71) Applicant: Panasonic Intellectual Property Management Co., Ltd., Osaka-shi, Osaka 540-6207 (JP)
(72) Inventor: UKAI, Kunihiro, Osaka-shi, Osaka 540-6207 (JP); INO, Daisuke, Osaka-shi, Osaka 540-6207 (JP); HASHIMOTO, Yasuhiro, Osaka-shi, Osaka 540-6207 (JP)
(74) Representative: Eisenführ Speiser
(86) International application number: PCT/JP2021/040698
(87) International publication number: WO 2022/097704

(57) **Abstract**

A food processing apparatus (100) includes a reaction tank (1) having an internal space (S 1) for storing a reactant that is in a liquid state and that is used for food, a cooler (10) that cools a reactant stored in the reaction tank (1), and a catalytic reactor (6) disposed in the internal space (S 1). The catalytic reactor (6) includes a reaction tube (7), a light source (8) disposed in the interior of the reaction tube (7), and a heat insulator (14) disposed between the reaction tube (7) and the light source (8). The outer surface of the reaction tube (7) is provided with a photocatalyst. The reaction tube (7) allows light radiated from the light source (8) to pass therethrough. The reaction tube (7) has a first end, and the first end is closed so as to serve as a bottom surface (7c) of the reaction tube (7). The thermal conductivity of the heat insulator (14) is lower than the thermal conductivity of the reaction tube (7).

## Description

### Technical Field

The present disclosure relates to a food processing apparatus.

### Background Art

PTL 1 discloses a manufacturing method in which a photocatalyst is used in a food production process so as to remove or deactivate microorganisms present in a brewed product at room temperature at which the brewed product is not heated.

### Citation List

### Patent Literature

PTL 1: Japanese Unexamined Patent Application Publication No. 2003-250514

### Summary of Invention

However, there is room for improvement in the device or the manufacturing method disclosed in PTL 1 mentioned above. For example, there is a problem that it is difficult to effectively reform a reactant that is used for food.

An aspect of the present disclosure has been made in view of the above situation, and the present disclosure provides a food processing apparatus capable of effectively reforming a reactant that is used for food.

A food processing apparatus according to an aspect of the present disclosure includes a reaction tank that has an internal space for storing a reactant, the reactant being in a liquid state and being to be used for food, a cooler that cools the reactant, which is stored in the reaction tank, and a catalytic reactor that is disposed in the internal space. The catalytic reactor includes a reaction tube, a light source disposed in an interior of the reaction tube, and a heat insulator disposed between the reaction tube and the light source. An outer surface of the reaction tube is provided with a photocatalyst. The reaction tube allows light radiated from the light source to pass through the reaction tube. The reaction tube has a first end, and the first end is closed in such a manner as to serve as a bottom surface of the reaction tube. A thermal conductivity of the heat insulator is lower than a thermal conductivity of the reaction tube.

Note that these general or specific aspects may be implemented as a method, a system, an integrated circuit, a computer program, a computer-readable recording medium, or any combination of an apparatus, a method, a system, an integrated circuit, a computer program, and a computer-readable recording medium. An example of the computer-readable recording medium is a non-volatile recording medium such as a compact disc read-only memory (CD-ROM).

A food processing apparatus according to an aspect of the present disclosure can be stably operated and can effectively reform a reactant that is used for food.

### Brief Description of Drawings

[Fig. 1] Fig. 1 is a diagram illustrating an example of a food processing apparatus of a first embodiment.
[Fig. 2] Fig. 2 is a diagram illustrating an example of a configuration of a catalytic reactor according to the first embodiment.
[Fig. 3] Fig. 3 is a diagram illustrating a food processing apparatus of a second embodiment.
[Fig. 4] Fig. 4 is a diagram illustrating an example of a configuration of a catalytic reactor according to the second embodiment.
[Fig. 5] Fig. 5 is a functional block diagram of the food processing apparatus according to the second embodiment.
[Fig. 6] Fig. 6 is a flowchart illustrating a first example of an operation of the food processing apparatus of the second embodiment.
[Fig. 7] Fig. 7 is a flowchart illustrating a second example of the operation of the food processing apparatus of the second embodiment.
[Fig. 8] Fig. 8 is a flowchart illustrating an example of an operation of a food processing apparatus of a third embodiment.

### Description of Embodiments

### (Underlying Knowledge Forming Basis of the Present Disclosure)

The present inventors have found that the following problems occur with regard to a food producing apparatus or a food producing method mentioned in the "Background Art" section.

In food production, reformation of raw materials of food has been widely practiced for the purpose of improving production efficiency, improving the content of nutritional ingredients, and so forth.

An example of a method for reforming raw materials of food is a method using a catalyst, and for example, there is a method in which a nickel catalyst is used to hydrogenate fat and oil components that are used as raw materials in production of margarine. Using an immobilized enzyme in food production can also be one of the uses of catalysts.

Although it is not from the standpoint of reforming raw materials of food, catalysts may sometimes be used for the purpose of sterilization in production processes, and for example, in PTL 1, studies have been conducted on a production method in which a photocatalyst is used in a food production process so as to remove or deactivate microorganisms present in a brewed product at room temperature at which the brewed product is not heated.

Although a method of the related art using a catalyst is effective in reforming a single-component raw material of food, it is an extension of a chemical engineering method, and thus, there is a limitation on an apparatus configuration. There is room for improvement in the method in order to make it compatible with a configuration suitable for catalysts that are used for multi-purpose development.

An apparatus that is used in a production method of the related art using a photocatalyst is also intended for sterilization, and thus, there is room for improvement in the apparatus in order to make it compatible with a configuration suitable for reforming raw materials of food. In particular, when it is necessary to operate a food processing apparatus at room temperature or lower, the temperature of a catalytic reactor provided with a photocatalyst decreases. If a light source that is used for efficiently radiating light onto the catalytic reactor is provided in the vicinity of the photocatalyst, the temperature of the light source decreases as the temperature of the catalytic reactor decreases, and accordingly, the light emission intensity of the light source decreases. As a result, the reaction rate of a reactant that is used for food decreases.

The present inventors have discovered that the reaction rate of a reactant that is used for food decreases as the temperature of a catalytic reactor decreases and conceived a food processing apparatus capable of effectively reforming a reactant, which is used for food, by suppressing a decrease in the reaction rate of the reactant.

An aspect of the present disclosure has been made in view of the above situation, and the present disclosure newly provides a food processing apparatus using a photocatalyst that reforms a raw material of food.

A food processing apparatus according to an aspect of the present disclosure includes a reaction tank that has an internal space for storing a reactant, the reactant being in a liquid state and being to be used for food, a cooler that cools the reactant, which is stored in the reaction tank, and a catalytic reactor that is disposed in the internal space. The catalytic reactor includes a reaction tube, a light source disposed in an interior of the reaction tube, and a heat insulator disposed between the reaction tube and the light source. An outer surface of the reaction tube is provided with a photocatalyst. The reaction tube allows light radiated from the light source to pass through the reaction tube. The reaction tube has a first end, and the first end is closed in such a manner as to serve as a bottom surface of the reaction tube. A thermal conductivity of the heat insulator is lower than a thermal conductivity of the reaction tube.

According to the above configuration, even when the reactant in the reaction tank is cooled by the cooler, since the heat insulator is disposed between the light source and the reaction tube, a decrease in the temperature of the light source due to the influence of the cooler can be suppressed. Thus, a decrease in a light emission intensity of the light source can be suppressed, and a decrease in the reaction rate of the reactant can be suppressed. Therefore, the reactant that is used for food can be effectively reformed.

The heat insulator may be made of at least one of plastic and glass wool.

Thus, the light source and the reaction tube can be effectively heat-insulated from each other.

The light source may include a light emitting diode (LED) that emits ultraviolet rays and/or a fluorescent lamp that emits ultraviolet rays.

Thus, reaction of the reactant with the photocatalyst can be effectively promoted.

The light source may include the fluorescent lamp, and the fluorescent lamp may include a container containing a mercury compound and facing the bottom surface. The heat insulator may be in contact with the bottom surface and the container.

Thus, the container and the bottom surface of the reaction tube can be heat-insulated from each other, so that a decrease in the light emission intensity of the light source due to a decrease in the temperature of the light source becomes less likely to occur, and a decrease in the light emission intensity of the fluorescent lamp can be effectively suppressed.

The food processing apparatus may further include a reaction-tube temperature sensor that measures a temperature inside the reaction tube and a controller that controls a light emission intensity and/or a light emission time of the light source based on a temperature measured by the reaction-tube temperature sensor.

According to the above configuration, the light source is controlled based on the temperature inside the reaction tube, and thus, the reaction of the reactant of food can be appropriately controlled.

When the temperature measured by the reaction-tube temperature sensor is lower than a first reference temperature, which is predetermined, the controller may perform control for increasing the light emission intensity of the light source to be higher than a light emission intensity of the light source when the temperature measured by the reaction-tube temperature sensor is higher than the first reference temperature and/or control for increasing the light emission time of the light source to be longer than a predetermined light emission time.

Thus, a decrease in a reaction amount of the reactant of food can be appropriately suppressed.

When the temperature measured by the reaction-tube temperature sensor is higher than the first reference temperature, the controller may perform control for reducing the light emission intensity of the light source to be lower than the light emission intensity of the light source when the temperature measured by the reaction-tube temperature sensor is lower than the first reference temperature and/or control for setting the light emission time of the light source to be equal to or shorter than the predetermined light emission time.

Thus, the reaction of the reactant of food can be appropriately controlled.

The food processing apparatus may further include a reaction-tube temperature sensor that measures a temperature inside the reaction tube, a stirrer that stirs the reactant in the reaction tank by rotating or reciprocating, and a controller that performs, when a temperature measured by the reaction-tube temperature sensor is lower than a first reference temperature, which is predetermined, control for increasing an operating amount of the stirrer to be greater than an operating amount of the stirrer when the temperature measured by the reaction-tube temperature sensor is higher than the first reference temperature.

According to the above configuration, the operating amount of the stirrer is controlled on the basis of the temperature inside the reaction tube, and thus, the reaction of the reactant of food can be appropriately controlled.

The food processing apparatus may further include a reaction-tank temperature sensor that measures a temperature of the reactant, which is stored in the reaction tank. The controller may cause the cooler to operate such that a temperature measured by the reaction-tank temperature sensor becomes equal to a predetermined second reference temperature and may stop light emission of the light source when the temperature measured by the reaction-tube temperature sensor is lower than a predetermined third reference temperature.

According to the above configuration, when the temperature inside the reaction tube becomes equal to the third reference temperature, for example, it can be determined that an abnormality has occurred, and the light emission of the light source can be stopped.

The food processing apparatus may further include a reaction-tank temperature sensor that measures a temperature of the reactant, which is stored in the reaction tank. The controller may cause the cooler to operate such that a temperature measured by the reaction-tank temperature sensor becomes equal to a predetermined second reference temperature and may stop light emission of the light source when the temperature measured by the reaction-tube temperature sensor is lower than a predetermined third reference temperature. The second reference temperature may be a temperature lower than the first reference temperature, and the third reference temperature may be a temperature between the first reference temperature and the second reference temperature.

According to the above configuration, when the temperature inside the reaction tube becomes equal to the third reference temperature, for example, it can be determined that an abnormality has occurred, and the light emission of the light source can be stopped.

Specific examples of embodiments will be described below with reference to the accompanying drawings.

The specific examples, which will be described below, represent examples of the above-described aspects. Thus, shapes, materials, components, arrangement positions and connection forms of the components, and so forth that will be mentioned below are not intended to limit the above-described aspects unless they are described in the claims. Among the components that will be mentioned below, the components that are not mentioned in the independent claim representing the most generic concept of the present aspect will be described as optional components. Repeated description may sometimes be omitted for the components denoted by the same reference sign in the drawings. The drawings schematically illustrate the components for ease of understanding, and the shapes of some of the components, the dimensional ratios of some of the components, and so forth may sometimes not be accurately illustrated.

### (First Embodiment)

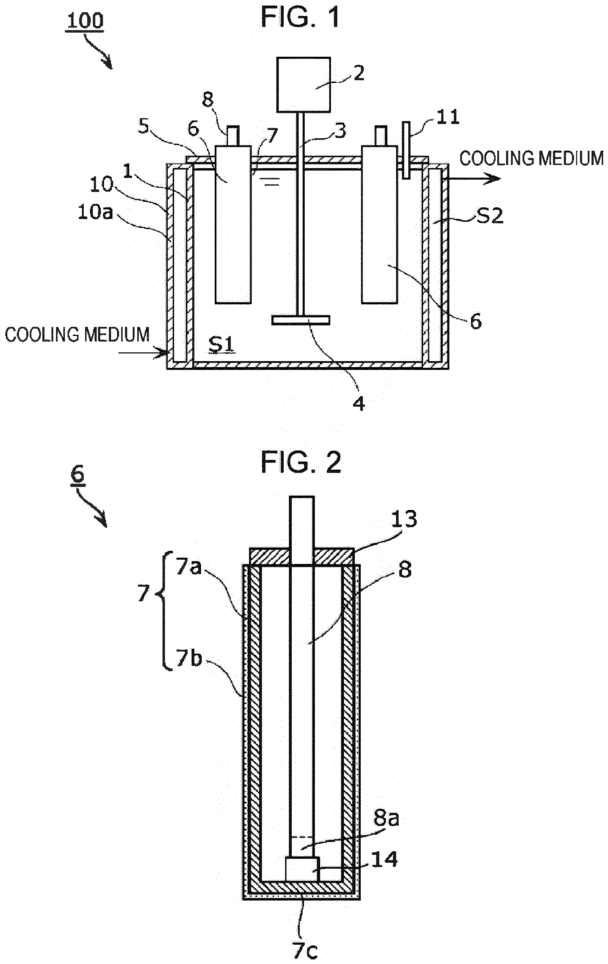

The configuration of a food processing apparatus 100 will now be described with reference to Fig. 1. Fig. 1 is a diagram illustrating an example of the food processing apparatus 100 of the first embodiment.

As illustrated in Fig. 1, the food processing apparatus 100 includes a reaction tank 1, a stirrer 2, catalytic reactors 6, a cooler 10, and a reaction-tank temperature sensor 11.

The reaction tank 1 has a first space S1 for storing a reactant that is in a liquid state and that is used for food. The reaction tank 1 is, for example, a circular cylindrical container with a bottom. Note that the reaction tank 1 does not need to have a circular cylindrical shape as long as it is a cylindrical container that has a bottom and the first space S1 for storing the liquid reactant. The reaction tank 1 is provided with a lid 5 that covers an upper opening of the reaction tank 1. The lid 5 is a member having a circular plate-like shape and has through holes through which a rotary shaft 3 of a stirring member 4, the catalytic reactors 6, and the reaction-tank temperature sensor 11 extend.

The stirrer 2 includes the stirring member 4 that stirs the reactant in the reaction tank 1 by rotating. The stirrer 2 is disposed in such a manner that the rotary shaft 3 of the stirrer 2 coincides with the central axis of the circular cylindrical shape of the reaction tank 1. The stirrer 2 includes a motor (not illustrated) that causes the rotary shaft 3 to rotate.

Here, a specific example of the stirring member 4 will be described.

The stirring member 4 may be formed of, for example, an inclined paddle blade. The stirring member 4 may be formed of any one of a propeller blade, a disk turbine blade, and a centrifugal stirring member so as to achieve an optimum processing condition by taking into consideration operation processing conditions such as the viscosity of the reactant and the power consumption of the stirrer 2. Note that, in the case where two or more stirring members 4 are used in the food processing apparatus 100, the stirring members 4 may include at least one of an inclined paddle blade, a propeller blade, a disk turbine blade, and a centrifugal stirring member.

The food processing apparatus 100 includes the catalytic reactors 6. When viewed in the axial direction of the rotary shaft 3 of the stirring member 4, the catalytic reactors 6 (the six catalytic reactors 6 in the present embodiment) are arranged around the rotary shaft 3 of the stirring member 4 in such a manner as to be spaced apart from one another. The outer sides of the six catalytic reactors 6 are surrounded by an inner wall surface of the reaction tank 1. In other words, the catalytic reactors 6 are arranged in the internal space S1 of the reaction tank 1. As a result, when the reactant in the reaction tank 1 is stirred by the stirrer 2, the stirred reactant can move between the catalytic reactors 6.

Here, details of the configuration of each of the catalytic reactors 6 will be described with reference to Fig. 2. Fig. 2 is a diagram illustrating an example of the configuration of each of the catalytic reactors 6 according to the first embodiment.

As illustrated in Fig. 2, each of the catalytic reactors 6 includes a reaction tube 7, a light source 8, and a heat insulator 14. Each of the catalytic reactors 6 may further include a sealing portion 13 that seals between an opening of the reaction tube 7 and the light source 8, the opening being formed at an end (a second end) of the reaction tube 7 that is located on the side opposite to the side on which a bottom surface 7c of the reaction tube 7 is present. As a result, the reaction tube 7 is airtightly sealed, and the airtightness of the interior of the reaction tube 7 is maintained. The interior of the reaction tube 7 may be filled with a dry gas.

The reaction tube 7 has an outer surface provided with a photocatalyst and the bottom surface 7c, which is formed by sealing a first end of the reaction tube 7, and allows light to pass therethrough. More specifically, the reaction tube 7 incudes a glass base member 7a having a circular cylindrical shape with a bottom and a photocatalyst thin film 7b provided on an outer surface of the glass base member 7a. The glass base member 7a is disposed such that a cylinder axis direction of the circular cylindrical shape of the glass base member 7a is parallel to the rotary shaft 3 of the stirring member 4.

The photocatalyst thin film 7b provided on the outer surface of the glass base member 7a is formed by, for example, a common sol-gel method. Specifically, the photocatalyst thin film 7b is made of TiO₂. A sol-gel liquid that is used in the method of forming the photocatalyst thin film 7b is applied to the outer surface of the glass base member 7a, and then, the glass base member 7a, to which the sol-gel liquid has been applied, is rotated by using a rotator. As a result, the sol-gel liquid is uniformly applied to the entire outer surface of the glass base member 7a. After the sol-gel liquid applied to the glass base member 7a has been dried, the glass base member 7a is dried in an electric furnace and then heated at a high temperature that is 500°C or higher, so that the photocatalyst thin film 7b is fired on the outer surface of the glass base member 7a.

The light source 8 radiates light onto the photocatalyst from the inside of the reaction tube 7. The light source 8 is inserted into the interior of the glass base member 7a from an open portion that is located on the side opposite to the side on which the bottom surface 7c of the glass base member 7a is present. More specifically, in order to effectively cause an exciton to be generated in the photocatalyst, the light source 8 includes a light source having a center wavelength of about 260 nm to about 400 nm. For example, the light source 8 includes a fluorescent lamp whose center wavelength is within the wavelength range of ultraviolet rays (UV-A), which is 315 nm to 400 nm. Consequently, reaction of the reactant with the photocatalyst can be effectively promoted.

The light source 8 formed of a fluorescent lamp includes a container 8a containing a mercury compound. The container 8a faces the bottom surface 7c of the reaction tube 7. The light source 8 may be disposed in such a manner as to face the thin film 7b of the reaction tube 7 in order to effectively radiate light onto the thin film 7b provided on the outer surface of the glass base member 7a. Note that the light source 8 may include, for example, a high-pressure mercury lamp, a light emitting diode (LED) that emits ultraviolet rays, or the like.

The heat insulator 14 is a member that is disposed between the light source 8 and the reaction tube 7 and that has a thermal conductivity lower than that of the reaction tube 7. The heat insulator 14 is disposed between the bottom surface 7c of the reaction tube 7 and the container 8a of the light source 8 and is in contact with the bottom surface 7c and the container 8a. Consequently, the container 8a that is likely to cause a decrease in the light emission intensity due to a decrease in the temperature thereof and the bottom surface 7c of the reaction tube 7 can be heat-insulated from each other, and a decrease in the light emission intensity of the light source 8 due to a decrease in the temperature of the reaction tube 7 can be effectively suppressed.

For example, the heat insulator 14 may be formed of a block that is made of a fluorocarbon resin and that has a thickness of about 20 mm. Note that the heat insulator 14 may be made of, for example, at least one of plastic and glass wool. As a result, the light source 8 and the reaction tube 7 can be effectively heat-insulated from each other.

The cooler 10 cools the reactant in the reaction tank 1. The cooler 10 is disposed in such a manner as to surround the outer sides of the catalytic reactors 6. More specifically, the cooler 10 includes an outer wall 10a that surrounds the reaction tank 1 and a cooling medium (refrigerant) that flows through a second space S2 formed between the reaction tank 1 and the outer wall 10a.

The cooler 10 operates on the basis of the temperature measured by the reaction-tank temperature sensor 11 so as to adjust the temperature of the reactant. More specifically, in the case of where the reactant having a temperature higher than a first temperature is cooled so as to have the first temperature, the cooler 10 causes the refrigerant having a temperature equal to or lower than the first temperature to flow through the second space S2. As a result, the cooler 10 cools the reactant by causing the refrigerant and the reactant to exchange heat with each other with the reaction tank 1 interposed therebetween. The refrigerant whose temperature has increased by heat exchange with the reactant may be cooled so as to have a temperature equal to or lower than the first temperature by, for example, a heat exchanger (not illustrated) that is disposed outside the second space S2, and the second space S2 and the heat exchanger may be connected to each other by a pipe (not illustrated) such that the refrigerant returns into the second space S2 after being cooled. The refrigerant may be caused to circulate between the second space S2 and the above-mentioned heat exchanger by, for example, a circulating pump or the like (not illustrated). In this case, the cooler 10 may start to cool the reactant by causing the circulating pump to start to operate.

The reaction-tank temperature sensor 11 is disposed in the reaction tank 1 and measures the temperature of the reactant. The reaction-tank temperature sensor 11 is formed of, for example, a thermistor, a thermocouple, or the like. The reaction-tank temperature sensor 11 extends through the lid 5 and is, for example, fixed to the lid 5.

Operation of the food processing apparatus 100 will now be described with reference with Fig. 1 and Fig. 2.

First, in the food processing apparatus 100, a reactant that serves as a raw material of food is put into the reaction tank 1. Next, the food processing apparatus 100 starts a photocatalytic treatment. More specifically, in the photocatalytic treatment, the food processing apparatus 100 turns on the light sources 8 of the catalytic reactors 6 so as to start radiation of light onto the photocatalyst thin films 7b from the interiors of the reaction tubes 7. In the photocatalytic treatment, the food processing apparatus 100 causes the rotary shaft 3 of the stirring member 4 to rotate by driving the motor of the stirrer 2 so as to stir the reactant in the reaction tank 1. In addition, in the photocatalytic treatment, the food processing apparatus 100 supplies the cooling medium to the second space S2 of the cooler 10 by driving the circulating pump of the cooler 10.

In this case, the food processing apparatus 100 measures the temperature of the reactant by using the reaction-tank temperature sensor 11 and adjusts the temperature of the cooling medium that is supplied to the second space S2 and/or the amount of the cooling medium such that the reactant has a predetermined temperature. The food processing apparatus 100 adjusts the temperature of the cooling medium by, for example, adjusting the amount of heat exchange performed by the heat exchanger, which is disposed outside the second space S2. More specifically, in the case where the heat exchanger is an air-cooled heat exchanger, the food processing apparatus 100 may adjust the temperature of the cooling medium by adjusting the airflow rate of a fan that promotes air cooling in the heat exchanger, and in the case where the heat exchanger is a water-cooled heat exchanger, the food processing apparatus 100 may adjust the temperature of the cooling medium by adjusting the amount of water that is transported by a pump that promotes water cooling in the heat exchanger. The food processing apparatus 100 may adjust the amount of the cooling medium supplied to the second space by adjusting the amount of the cooling medium that is caused by the circulating pump to circulate between the second space S2, which is formed outside the reaction tank 1, and the heat exchanger. In this manner, the temperature and/or the amount of the cooling medium to be supplied can be adjusted by using, for example, a temperature-controlled water circulator (not illustrated) including a heat exchanger, a circulating pump, and a pipe.

For example, in the case where the reaction of a reactant in the food processing apparatus 100 is fermentation of beer yeast, maturation at a low temperature (e.g., about 5°C) may be performed. In this case, a target preset temperature in the cooler 10 is 5°C.

In the food processing apparatus 100, the photocatalyst irradiated with light is brought into contact with the reactant that serves as a raw material of food so as to reform the reactant by the photocatalyst. For example, in the case of reforming a raw material of beer, the fermentation period can be shortened by decomposing the sugar in the wort beforehand.

In this operation, the food processing apparatus 100 cools the reactant in the reaction tank 1, and the temperature of the inner surface of the reaction tube 7 of each of the catalytic reactors 6 is lowered due to heat conduction to the low-temperature reactant. As a result, the light emission efficiency of each of the light sources 8 changes in response to a temperature change of the light source 8. The light emission efficiency of each of the light sources 8 decreases in a low-temperature environment, and the intensity of the light emitted to the photocatalyst decreases. In particular, in the food processing apparatus 100, since the reactant is cooled to have a low temperature, if the light sources 8 and their respective reaction tubes 7 are in contact with each other, the temperature of each of the light sources 8 greatly decreases. As a result, the light emission intensity decreases, and an exciton generation state in the photocatalyst deteriorates, which adversely affects the reactivity of the reactant. Accordingly, in the catalytic reactors 6 of the first embodiment, the heat insulators 14 are provided between the bottom surfaces 7c of the reaction tubes 7 and the light sources 8, so that a decrease in the light emission intensity of each of the light sources 8 due to a decrease in the temperature of the reactant is suppressed.

The following experiment was conducted to verify an effect of the configuration of each of the catalytic reactors 6 of the first embodiment. More specifically, in the experiment, an aqueous solution of formic acid with a formic acid concentration of 10 ppm was used as a reactant. The cooler 10 was operated so as to adjust the temperature of the reactant to about 5°C. The light sources 8 of the catalytic reactors 6 were operated, and the decomposability of the formic acid using the photocatalyst was checked. As a result, it was confirmed that the reaction rate constant of decomposition of the formic acid was improved (by about 20% under the conditions used in this experiment) compared with the case where the catalytic reactors 6 were not provided with the heat insulators 14.

According to the food processing apparatus 100 of the present embodiment, even when the reactant in the reaction tank 1 is cooled by the cooler 10, since the heat insulators 14 are arranged between the light sources 8 and the respective reaction tubes 7, a decrease in the temperature of each of the light sources 8 due to the influence of the cooler 10 can be suppressed. Thus, a decrease in the light emission intensity of each of the light sources 8 can be suppressed, and a decrease in the reaction rate of the reactant can be suppressed. Therefore, the reactant used for food can be effectively reformed. In other words, the food processing apparatus 100 can perform a stable operation with a simple configuration and in particular, the food processing apparatus 100 can provide an advantageous effect of enabling effective reformation of a raw material that is used for food and that needs to be cooled.

### (Second Embodiment)

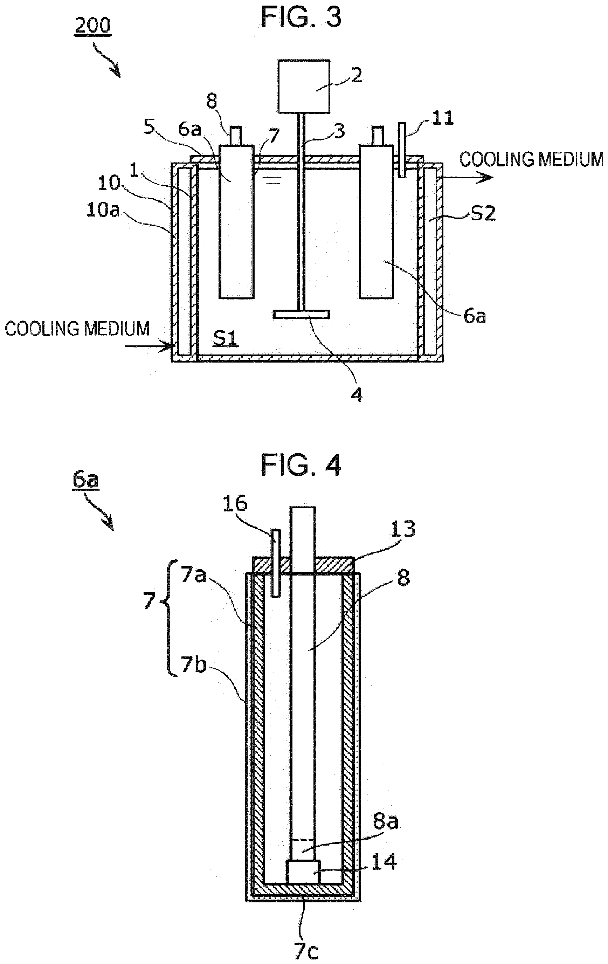

A food processing apparatus 200 according to a second embodiment will now be described with reference to Fig. 3. Fig. 3 is a diagram illustrating an example of the food processing apparatus 200 of the second embodiment.

The difference between the food processing apparatus 200 according to the second embodiment and the food processing apparatus 100 according to the first embodiment is the configuration of each catalytic reactor 6a. The difference is that, in the food processing apparatus 200, the stirrer 2, the light sources 8, and the cooler 10 are controlled in accordance with detection results obtained by a sensor included in the food processing apparatus 200.

This matter will be described in detail below.

Details of the configuration of each of the catalytic reactors 6a will be described with reference to Fig. 4. Fig. 4 is a diagram illustrating an example of the configuration of each of the catalytic reactors 6a according to the second embodiment.

Each of the catalytic reactors 6a has the configuration of each of the catalytic reactors 6 of the first embodiment and further includes a reaction-tube temperature sensor 16 that measures the temperature inside the corresponding reaction tube 7. For example, the reaction-tube temperature sensor 16 extends through the sealing portion 13 and is fixed to the sealing portion 13. The periphery of the reaction-tube temperature sensor 16 is sealed with the sealing portion 13, and the airtightness of the interior of the reaction tube 7 is maintained. The configuration of each of the catalytic reactors 6a, except with regard to the reaction-tube temperature sensor 16, is similar to the configuration of each of the catalytic reactors 6, and thus, the description thereof will be omitted.

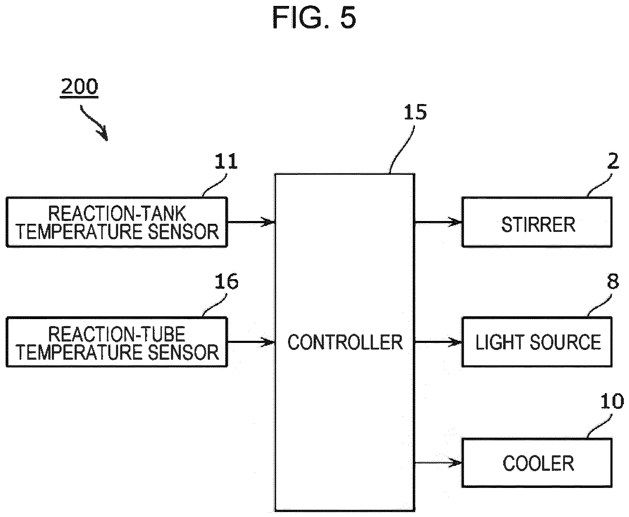

A controller 15 that is included in the food processing apparatus 200 will now be described with reference to Fig. 5. Fig. 5 is a functional block diagram of the food processing apparatus 200 according to the second embodiment.

As illustrated in Fig. 5, the food processing apparatus 200 may include the controller 15. The controller 15 controls the operation of the food processing apparatus 200. The controller 15 receives measurement results obtained by the reaction-tank temperature sensor 11 and the reaction-tube temperature sensors 16 and controls at least one of the stirrer 2, the light sources 8, and the cooler 10 in accordance with the measurement results. The controller 15 controls the light emission intensity and/or the light emission time of each of the light sources 8 on the basis of, for example, the temperature measured by the corresponding reaction-tube temperature sensor 16. The controller 15 may be implemented by, for example, a processor and a memory that stores a program executed by the processor. The controller 15 may be implemented by, for example, a dedicated circuit.

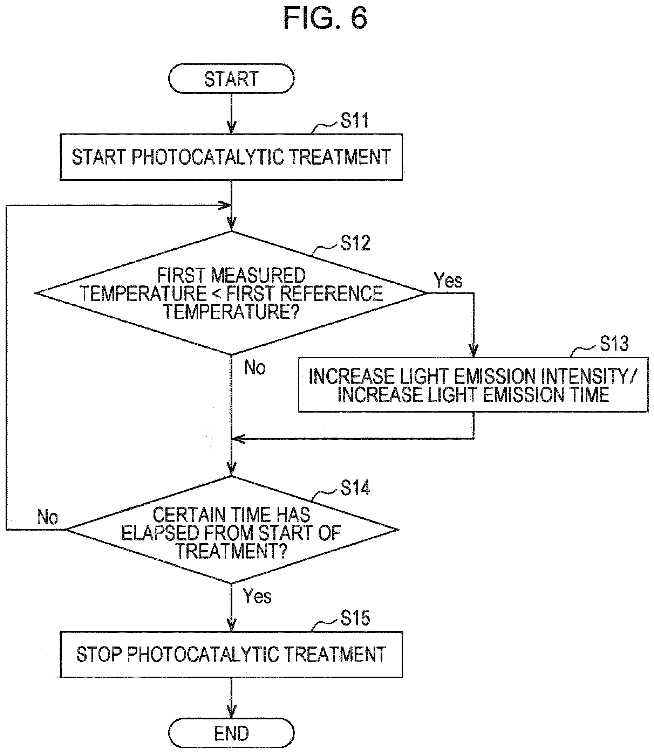

Operation of the food processing apparatus 200 will now be described with reference to Fig. 6. Fig. 6 is a flowchart illustrating a first example of the operation of the food processing apparatus 200 of the second embodiment.

First, the controller 15 starts a photocatalytic treatment (S1 1). The photocatalytic treatment is similar to the treatment of the first embodiment, which has been described above, and thus, the description thereof will be omitted.

Next, the controller 15 determines whether first measured temperatures measured by the reaction-tube temperature sensors 16 are each lower than a predetermined first reference temperature (S12).

If the controller 15 determines that one of the first measured temperatures measured by the reaction-tube temperature sensors 16 is lower than the predetermined first reference temperature (Yes in S12), the controller 15 performs control for increasing the light emission intensity of the corresponding light source 8 to be higher than that when the first measured temperature is higher than the first reference temperature and/or control for increasing the light emission time of the light source 8 to be longer than a predetermined light emission time (S13).

For example, the controller 15 may increase the light emission intensity of the light source 8 by increasing the electrical power supplied to the light source 8 to be larger than that supplied to the light source 8 when the first measured temperature is equal to or higher than the first reference temperature. The first reference temperature may be a temperature that is set on the basis of a temperature at which the intensity of the light radiated onto the photocatalyst becomes lower than a predetermined intensity while the first measured temperatures measured by the reaction-tube temperature sensors 16 and the light emission intensities of the light sources 8 may be measured beforehand. Note that, when the controller 15 increases the light emission time of the light source 8 to be longer than the predetermined light emission time, the controller 15 updates the light emission time set in the photocatalytic treatment to a light emission time longer than the predetermined light emission time. Increasing the light emission time of the light source 8 results in an increase in a reaction time. In the case where the light emission intensity becomes one-half of an initial light emission intensity, the controller 15 changes the light emission time to a length twice a light emission time that is initially set, so that an equivalent reactivity can be ensured even when the light emission intensity decreases. Note that the controller 15 may perform any one of the control for increasing the light emission intensity of the light source 8 and the control for increasing the light emission time of the light source 8 to a light emission time longer than the predetermined light emission time or may perform both of these controls.

If the controller 15 determines that one of the first measured temperatures measured by the reaction-tube temperature sensors 16 is equal to or higher than the predetermined first reference temperature (No in S 12), or after step S13 has been performed, the controller 15 determines whether a certain period of time has elapsed since the photocatalytic treatment has been started (S14). More specifically, the controller 15 starts counting when the photocatalytic treatment is started and determines whether the certain period of time has elapsed since the photocatalytic treatment has been started by determining whether the count is equal to the certain period of time. Note that the certain period of time is the light emission time set in the photocatalytic treatment and is stored in a memory (not illustrated) included in the controller 15.

If the controller 15 determines that the certain period of time has elapsed since the photocatalytic treatment has been started (Yes in S14), the controller 15 stops the photocatalytic treatment (S15). If the controller 15 determines that the certain period of time has not yet elapsed since the photocatalytic treatment has been started (No in S14), the process returns to step S12.

Note that, if the first measured temperature becomes equal to or higher than the first reference temperature in step S12 after the light emission intensity has been increased or the light emission time is set to be longer in step S13, the controller 15 may perform control for reducing the light emission intensity of the light source 8 to be lower than that when the first measured temperature is lower than the first reference temperature and/or control for setting the light emission time of the light source 8 to be equal to or shorter than the predetermined light emission time. In this case, the controller 15 may perform control for resetting the light emission intensity of the light source 8 to the previous light emission intensity set before step S13 is performed and/or control for resetting the light emission time of the light source 8 to the previous light emission time set before step S13 is performed.

Note that the control unit 15 may determine, at a timing between step S11 and step S12, whether the first measured temperature is equal to or higher than another reference temperature that is different from the first reference temperature, and if the first measured temperature is equal to or higher than the other reference temperature, the controller 15 may perform the above-mentioned control for reducing the light emission intensity of the light source 8 and/or the above-mentioned control for setting the light emission time of the light source 8 to be equal to or shorter than the predetermined light emission time. The determination performed by the controller 15 may be performed if the determination result in step S14 is No.

When the temperature of the reactant becomes extremely low, the reaction tubes 7 are cooled, and there may be a case where the temperatures of the light sources 8 greatly decrease even with the configuration of the first embodiment in which the catalytic reactors 6 are provided with the heat insulators 14. In this case, the light emission intensity of each of the light sources 8 decreases, which in turn results in a change of the exciton generation state in the photocatalyst, and there is a possibility that this will affect the reactivity of the reactant. According to the first example of the operation of the food processing apparatus 200 of the present embodiment, each of the light sources 8 is controlled on the basis of the temperature inside the corresponding reaction tube 7, and thus, the reaction amount of a reactant of food can be more appropriately controlled.

In the food processing apparatus 200 according to the present embodiment, when one of the first measured temperatures measured by the reaction-tube temperature sensors 16 is lower than the predetermined first reference temperature, the controller 15 performs control for increasing the light emission intensity of the corresponding light source 8 and/or control for increasing the light emission time of the light source 8 to be longer than the predetermined light emission time. Thus, a decrease in the reaction amount of a reactant of food can be appropriately suppressed.

A second example of the operation of the food processing apparatus 200 will now be described. The second example is an example in which, when the temperatures of the light sources 8 are reduced to a temperature at which the light sources 8 cannot obtain a light emission intensity required for reaction of a reactant, control for stopping the light emission of the light sources 8 is performed even if a certain period of time has not yet elapsed since a photocatalytic treatment has been started.

The controller 15 of the food processing apparatus 200 adjusts the temperature of the reactant to be equal to a second reference temperature that is lower than the first reference temperature by causing the cooler 10 to operate. The second reference temperature is a target preset temperature in the cooler 10, which is 5°C and which has been mentioned in the description of the first embodiment.

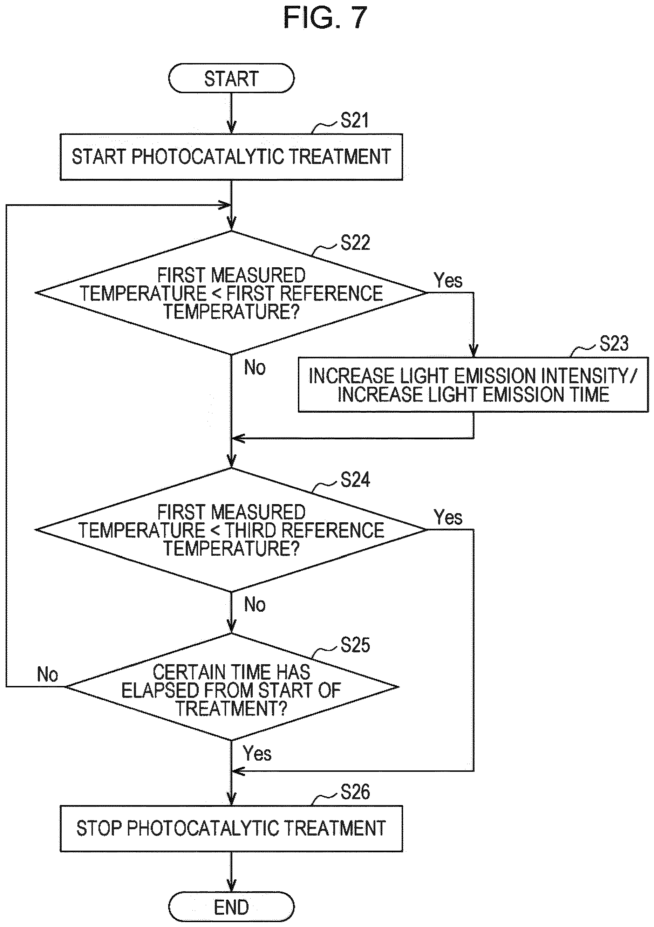

Fig. 7 is a flowchart illustrating the second example of the operation of the food processing apparatus 200 of the second embodiment.

First, the controller 15 starts a photocatalytic treatment (S21).

Next, the controller 15 determines whether each of the first measured temperatures is lower than the first reference temperature (S22).

If the controller 15 determines that one of the first measured temperatures is lower than the first reference temperature (Yes in S22), the controller 15 performs control for increasing the light emission intensity of the corresponding light source 8 and/or control for increasing the light emission time of the light source 8 to be longer than the predetermined light emission time (S23).

Note that steps S21 to S23 are the same as steps S11 to S13, respectively.

If the controller 15 determines that one of the first measured temperatures is equal to or higher than the first reference temperature (No in S22), or after step S23 has been performed, the controller 15 determines whether the first measured temperature is lower than a third reference temperature (S24). The third reference temperature is a temperature between the first reference temperature and the second reference temperature. The third reference temperature may be a temperature that is set on the basis of a temperature at which each of the light sources 8 cannot obtain a light emission intensity required for the reaction of the reactant while the correlation between the temperature of each of the light sources 8 at which the light source 8 cannot obtain the light emission intensity required for the reaction of the reactant and the temperature measured by the corresponding reaction-tube temperature sensor 16 may be determined beforehand.

If the controller 15 determines that the first measured temperature is equal to or higher than the third reference temperature (No in S24), the controller 15 determines whether the certain period of time has elapsed since the photocatalytic treatment has been started (S25).

If the controller 15 determines that the first measured temperature is lower than the third reference temperature (Yes in S24), or if the first measured temperature determines that the certain period of time has elapsed since the photocatalytic treatment has been started (Yes in S25), the controller 15 stops the photocatalytic treatment (S26). If the first measured temperature determines that the certain period of time has not yet elapsed since the photocatalytic treatment has been started (No in S25), the process returns to step S22. Note that steps S25 and S26 are the same as steps S14 and S15, respectively.

According to the second example of the operation of the food processing apparatus 200 of the present embodiment, the controller 15 causes the cooler 10 to operate in such a manner that the temperature measured by the reaction-tank temperature sensor 11 becomes equal to the predetermined second reference temperature. When one of the temperatures measured by the reaction-tube temperature sensors 16 is lower than the predetermined third reference temperature, the controller 15 stops light emission of the corresponding light source 8. Thus, when the temperature inside the corresponding reaction tube 7 becomes equal to the third reference temperature, for example, the controller 15 can determine that an abnormality has occurred and stop the light emission of the light source 8. As a result, the probability that the photocatalyst treatment will be continued under a condition that is less likely to promote the reaction of the reactant can be reduced.

The second reference temperature is lower than the first reference temperature, and the third reference temperature is a temperature between the first reference temperature and the second reference temperature. Thus, the controller 15 can execute an operation control without inconsistency.

### (Third Embodiment)

A food processing apparatus according to a third embodiment will now be described. In the food processing apparatus according to the third embodiment, instead of performing the control for changing the light emission intensities and/or the light emission times of the light sources 8, which is performed in the food processing apparatus 200 according to the second embodiment, control for changing the operating amount of the stirrer 2 is performed.

The configuration of the food processing apparatus according to the third embodiment is similar to that of the food processing apparatus 200 according to the second embodiment. Note that the catalytic reactors 6 of the first embodiment may be used instead of the catalytic reactors 6a.

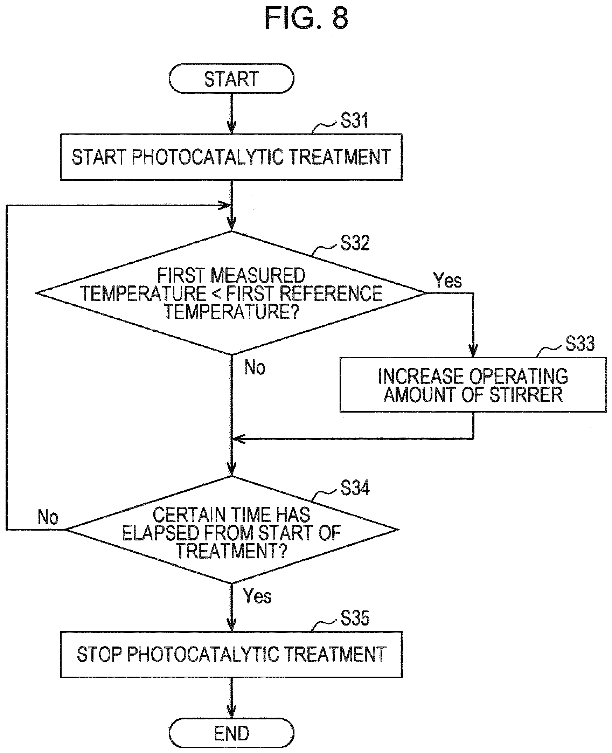

Operation of the food processing apparatus 200 according to the third embodiment will now be described with reference to 8. Fig. 8 is a flowchart illustrating the operation of the food processing apparatus 200 of the third embodiment.

First, the controller 15 starts a photocatalytic treatment (S31).

Next, the controller 15 determines whether each of the first measured temperatures is lower than the first reference temperature (S32).

Note that steps S31 and S32 are the same as steps S11 and S12, respectively.

If the controller 15 determines that at least one of the first measured temperatures is lower than the first reference temperature (Yes in S32), the controller 15 performs control for increasing the operating amount of the stirrer 2 to be greater than that when the at least one first measured temperature is higher than the first reference temperature (S33). Note the operating amount of the stirrer 2 is an operating speed, which is, for example, the speed at which the stirrer 2 rotates.

If the controller 15 determines that at least one of the first measured temperatures is equal to or higher than the first reference temperature (No in S32), or after step S33 has been performed, the controller 15 determines whether a certain period of time has elapsed since the photocatalytic treatment has been started (S34). Note that, if the controller 15 determines that each of the first measured temperatures is equal to the first reference temperature, it is only necessary to perform any one of step S33 and step S34.

If the controller 15 determines that the certain period of time has elapsed since the photocatalytic treatment has been started (Yes in S34), the controller 15 stops the photocatalytic treatment (S35). If the controller 15 determines that the certain period of time has not yet elapsed since the photocatalytic treatment has been started (No in S34), the process returns to step S32.

Note that, after the operating amount of the stirrer 2 has been increased in step S33, if it is determined that at least one of the first measured temperatures is equal to or higher than the first reference temperature in step S32, the controller 15 may perform control for reducing the operating amount of the stirrer 2 to be lower than that when the at least one first measured temperatures is lower than the first reference temperature. In this case, the controller 15 may perform control for resetting the operating amount of the stirrer 2 to the previous operating amount of the stirrer 2 set before step S33 is performed.

When the temperature of the reactant becomes extremely low, the reaction tubes 7 are cooled, and there may be a case where the temperatures of the light sources 8 greatly decrease even with the configuration of the first embodiment in which the catalytic reactors 6 are provided with the heat insulators 14. In this case, the light emission intensity of each of the light sources 8 decreases, which in turn results in a change of the exciton generation state in the photocatalyst, and there is a possibility that this will affect the reactivity of the reactant. According to the food processing apparatus 200 of the present embodiment, when at least one of the temperatures inside the reaction tubes 7 is lower than the first reference temperature, the operating amount of the stirrer 2 is increased, and thus, the degree of contact between a reactant and the catalytic reactors 6 can be improved. As a result, even when the temperatures of the light source 8 decrease, the reactivity of the reactant can be maintained by increasing the reaction probability between the reactant and an exciton generated in the photocatalyst. Therefore, the reaction amount of a reactant of food can be more appropriately controlled.

Although food processing apparatuses according to one or more aspects of the present disclosure have been described above on the basis of the embodiments, the present disclosure is not limited to the embodiments. The scope of the one or more aspects of the present disclosure may include embodiments obtained by making various modifications conceivable by those skilled in the art to the above-described embodiments and embodiments obtained by combining some of the components of the above-described embodiments as long as the obtained embodiments are within the scope of the present disclosure.

### Industrial Applicability

An aspect of the present disclosure is applicable to, for example, a food processing apparatus using a photocatalyst that reforms a raw material of food.

### Reference Signs List

1 reaction tank
2 stirrer
3 rotary shaft
4 stirring member
5 lid
6, 6a catalytic reactor
7 reaction tube
7a glass base member
7b thin film
7c bottom surface
8 light source
8a container
10 cooler
10a outer wall
11 reaction-tank temperature sensor
13 sealing portion
14 heat insulator
15 controller
16 reaction-tube temperature sensor
100, 200 food processing apparatus

## Claims

1. A food processing apparatus comprising:
a reaction tank that has an internal space for storing a reactant, the reactant being in a liquid state and being to be used for food;
a cooler that cools the reactant, which is stored in the reaction tank; and
a catalytic reactor that is disposed in the internal space,
wherein the catalytic reactor includes a reaction tube, a light source disposed in an interior of the reaction tube, and a heat insulator disposed between the reaction tube and the light source,
wherein an outer surface of the reaction tube is provided with a photocatalyst,
wherein the reaction tube allows light radiated from the light source to pass through the reaction tube,
wherein the reaction tube has a first end, and the first end is closed in such a manner as to serve as a bottom surface of the reaction tube, and
wherein a thermal conductivity of the heat insulator is lower than a thermal conductivity of the reaction tube.

2. The food processing apparatus according to claim 1,
wherein the heat insulator is made of at least one of plastic and glass wool.

3. The food processing apparatus according to claim 1 or 2,
wherein the light source includes a light emitting diode (LED) that emits an ultraviolet ray and/or a fluorescent lamp that emits an ultraviolet ray.

4. The food processing apparatus according to claim 3,
wherein the light source includes the fluorescent lamp,
wherein the fluorescent lamp includes a container containing a mercury compound and facing the bottom surface, and
wherein the heat insulator is in contact with the bottom surface and the container.

5. The food processing apparatus according to any one of claims 1 to 4, further comprising:
a reaction-tube temperature sensor that measures a temperature inside the reaction tube; and
a controller that controls a light emission intensity and/or a light emission time of the light source based on a temperature measured by the reaction-tube temperature sensor.

6. The food processing apparatus according to claim 5,
wherein, when the temperature measured by the reaction-tube temperature sensor is lower than a first reference temperature, which is predetermined, the controller performs control for increasing the light emission intensity of the light source to be higher than a light emission intensity of the light source when the temperature measured by the reaction-tube temperature sensor is higher than the first reference temperature and/or control for increasing the light emission time of the light source to be longer than a predetermined light emission time.

7. The food processing apparatus according to claim 6,
wherein, when the temperature measured by the reaction-tube temperature sensor is higher than the first reference temperature, the controller performs control for reducing the light emission intensity of the light source to be lower than the light emission intensity of the light source when the temperature measured by the reaction-tube temperature sensor is lower than the first reference temperature and/or control for setting the light emission time of the light source to be equal to or shorter than the predetermined light emission time.

8. The food processing apparatus according to any one of claims 1 to 4, further comprising:
a reaction-tube temperature sensor that measures a temperature inside the reaction tube;
a stirrer that stirs the reactant in the reaction tank by rotating or reciprocating; and
a controller that performs, when a temperature measured by the reaction-tube temperature sensor is lower than a first reference temperature, which is predetermined, control for increasing an operating amount of the stirrer to be greater than an operating amount of the stirrer when the temperature measured by the reaction-tube temperature sensor is higher than the first reference temperature.

9. The food processing apparatus according to any one of claims 5 to 8, further comprising:
a reaction-tank temperature sensor that measures a temperature of the reactant, which is stored in the reaction tank,
wherein the controller
causes the cooler to operate such that a temperature measured by the reaction-tank temperature sensor becomes equal to a predetermined second reference temperature, and
stops light emission of the light source when the temperature measured by the reaction-tube temperature sensor is lower than a predetermined third reference temperature.

10. The food processing apparatus according to any one of claims 6 to 8, further comprising:
a reaction-tank temperature sensor that measures a temperature of the reactant, which is stored in the reaction tank,
wherein the controller
causes the cooler to operate such that a temperature measured by the reaction-tank temperature sensor becomes equal to a second reference temperature, which is predetermined, and
stops light emission of the light source when the temperature measured by the reaction-tube temperature sensor is lower than a third reference temperature, which is predetermined,
wherein the second reference temperature is a temperature lower than the first reference temperature, and
wherein the third reference temperature is a temperature between the first reference temperature and the second reference temperature.
